(19) Europäisches Patentamt

European Patent Office

Office européen des brevets

(11) **EP 0 772 351 B1**

(12) **EUROPEAN PATENT SPECIFICATION**

(45) Date of publication and mention
of the grant of the patent:
**11.10.2000 Bulletin 2000/41**

(51) Int Cl.⁷: **H04N 5/44**, H04N 5/14

(21) Application number: **95117288.1**

(22) Date of filing: **02.11.1995**

(54) **Motion detection for interlaced video signals**

Bewegungsdetektor für Videosignale mit Zeilensprung

Détection de mouvement pour signaux vidéo entrelacés

(84) Designated Contracting States:
**DE FR GB NL**

(43) Date of publication of application:
**07.05.1997 Bulletin 1997/19**

(73) Proprietor: **MATSUSHITA ELECTRIC INDUSTRIAL
CO., LTD
Kadoma-shi, Osaka 571-0000 (JP)**

(72) Inventor: **Shigetani, Yoshihiro,
c/o Matsushita Elec Ind Co
Osaka 571 (JP)**

(74) Representative: **Grünecker, Kinkeldey,
Stockmair & Schwanhäusser Anwaltssozietät
Maximilianstrasse 58
80538 München (DE)**

(56) References cited:
**EP-A- 0 474 272          EP-A- 0 482 894
EP-A- 0 578 290          WO-A-85/02080
US-A- 4 924 305**

## Description

The present invention relates to an apparatus and a method for motion detection with interlaced video signals and is in particular applicable for modern 100/120 Hz or 50/60 Hz progressive scan TV receivers.

Motion detection constitutes an important feature of modern TV receivers and is mainly used to control motion adaptive signal processing features that improve the picture quality, but may also be applied in cases where it is important to reduce the bandwidth of a video signal as, for example, with HDTV applications.

The present invention is concerned with motion detection for picture quality improvement and will be explained below mainly in accordance with motion adaptive progressive scan conversion, but, as will be apparent to the person skilled in the art, is also applicable to other motion adaptive picture quality improvements as, for example, motion adaptive noise reduction or motion adaptive large area flicker reduction.

One well known prior art system for motion detection is based on the detection of absolute frame difference. In its simplest form the detected frame difference is considered as motion information, meaning that if the frame difference is large, the picture is considered to contain moving objects and if the frame difference is small the picture is considered to be a still picture.

EP-A-0 482 894 (SONY CORP) 29 April 1992 discloses a scan converter for a non-interlace television which comprises an interfield interpolation circuit for carrying out interfield interpolation and intrafield interpolation. A motion detector controls a weighting adder and a sequential scan converter is provided for carrying out conversion into a sequential scanning signal on the basis of the input video signal and an output signal from the weighting adder. A controller controls at least the interfield interpolation means in accordance with a television standard system PAL/NTSC of the input video signal, thereby making it possible to lessen disturbance, e.g., deterioration in the picture quality, etc. occurring in the interlaced scanning.

Motion detection based on frame difference can be realised with simple hardware but bears the disadvantage of a high rate of mis-detection of motion.

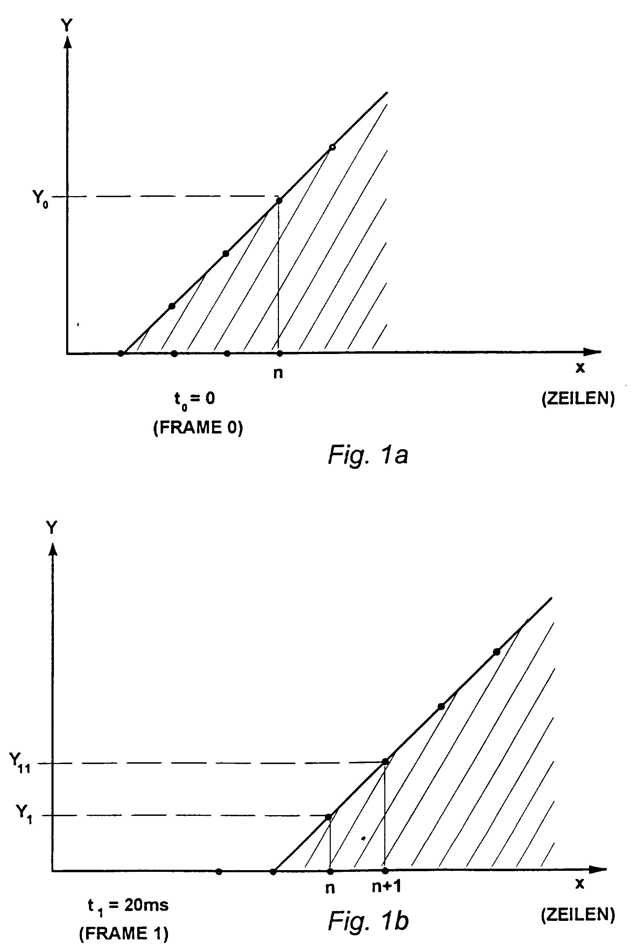

To overcome these problems a method has been developed, known in the art as the "gradient method". The theoretical background of the gradient method will be explained herein below in connection with Fig. 1.

The abscissa illustrated in Fig 1a shows the lines of a frame and a particular line thereof is designated as the n-th line. It is assumed that at the time of a frame 0, the amplitude or brightness in line n (for example, for a certain pixel) is $Y_o$ as shown by the ordinate of Fig. 1a. If a picture with motion is considered, then the brightness of the pixel in line n will change within the next frame i.e. frame 1. This is shown in Fig. 1b where the brightness value of the n-th line has decreased to a value $Y_1$ due to motion of the triangle representing high brightness values towards higher numbered lines. As it may be seen from Fig. 1b, subsequent line n + 1 has a brightness value of $Y_{11}$ due to the increase of brightness towards lines having higher numbers. If it is assumed that the increase of brightness from one pixel in one line to the corresponding pixel in the next line is constant, i. e. if it assumed that the slope of the shown triangle is constant, then it is possible to determine motion velocity S for an area of the picture which, at the time of frame 0, was located on the n-th line with a brightness value $Y_o$. This will become apparent from the following two equations:

$$Y_o = Y_1 + s(Y_{11} - Y_1) \qquad (1)$$

(S = normalised velocity) which may be transformed into:

$$S = \frac{Y_o - Y_1}{Y_{11} - Y_1} = \frac{\Delta F}{\Delta L} \qquad (2)$$

This means that velocity of motion for a certain pixel may be approximated by the frame difference for the pixel divided through the respective line difference, i.e. the difference in brightness between two subsequent lines.

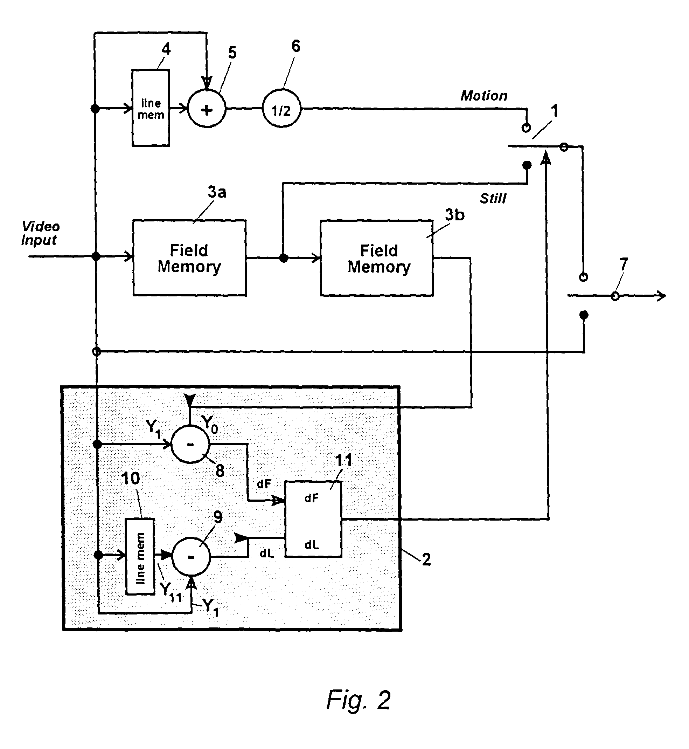

The structure in Fig. 2 may be employed to implement this principle for motion detection.

With the circuit shown in Fig. 2, progressive scan conversion is achieved by doubling the output picture lines whereby the additional lines of the frame which are not included in the current field are interpolated. The interpolation of the missing lines is done adaptively to motion included in the picture, whereby in case of motion an interpolated line is generated based on the average of the respective closest lines of the current field and, in case of a still picture, the missing lines are taken from the field before.

Switch 1, in Fig. 2, is controlled by a motion detection signal, or motion value, supplied by motion detection unit 2. In case that no motion has been detected, switch 1 switches to the terminal designated by the word "STILL", in that the interpolation lines are read out from a field memory 3a, storing the information of the field preceding the current field. In the case that motion detection unit 2 outputs a signal indicating motion, switch 1 switches to the terminal designated by the term "MOTION", in that for each interpolated line the respective two closest lines of the current field are averaged and the result is taken for the interpolation lines. As it is shown in Fig. 2, the average operation is achieved by the combined function of line memory 4, adder 5 and multiplying unit 6.

The interpolated lines and the lines of the current field are combined at terminal 7 in order to form a video output with motion adaptive progressive scan conversion.

In its simplest form switch 1 provides a pure switching between the two different interpolations in accordance with the motion value M supplied from motion detection unit 2.

Motion detection unit 2 generates motion value M in the following manner:

Motion detection unit 2 receives as a first input the current video information and as a second input the video information of the second field memory 3b, and thus video information of the preceding frame.

Subtractor unit 8 generates a frame difference between the current and the preceding frame i.e. $\Delta F$ of equation 2. Subtractor unit 9 and line memory 10 generate a line difference $\Delta L$ and both results, $\Delta F$ and $\Delta L$, are supplied to divider unit 11.

In this manner motion detection unit 2 exactly implements the above given equation 2 and thus outputs a signal indicative of the velocity of motion of a particular area of the picture. In order to understand the relationship between Figs. 1a, 1b and Fig. 2, the same abbreviations for signals have been used in these Figures. Subtractor unit 8 receives the brightness signal $Y_1$ of a current pixel and additionally the brightness information $Y_0$ of the corresponding pixel one frame before. In the same manner, subtractor unit 9 receives, at its two inputs, the brightness values of two adjacent lines, i.e. brightness values $Y_{11}$ and $Y_1$.

Although the motion detection unit shown in Fig. 2 provides quite accurate motion detection, this circuit is, due to a complex hardware structure, especially of divider unit 11, too expensive to be used in commonly available electrical equipment.

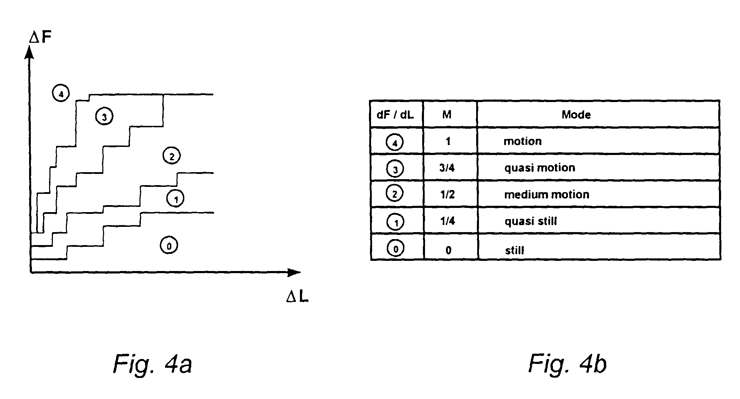

Further, in particular situations, the motion detection unit 2, of Fig. 2, will not be able to provide suitable motion information, as it is more fully explained below in connection with Fig. 4.

It is the object of the present invention to provide an apparatus as well as a method for simplified and improved motion detection.

This object is solved by the subject matter of claims 1, 24 and claim 26.

Preferred embodiments are the subject matter of dependent claims to claims 1, 24 and 26.

Preferred embodiments of the present invention will be explained in the following in connection with the accompanying drawings, which show:

Figs. 1a and 1b are illustrations for explaining motion detection according to the "gradient method";

Fig. 2 is a diagram illustrating the structure of a circuit for progressive scan conversion based on motion detection;

Fig. 3 is a diagram illustrating a preferred embodiment of a circuit for progressive scan conversion including a motion detection unit according to the present invention;

Figs. 4a and 4b are illustrations for explaining the function of the look up table means according to a preferred embodiment of the present invention;

Fig. 5 is a diagram illustrating a further embodiment of a circuit for progressive scan conversion including a motion detection unit according to the present invention;

Fig. 6 is an illustration for explaining problems arising with motion detection according to the "gradient method";

Fig. 7 is a diagram illustrating a further embodiment of a circuit for progressive scan conversion including a motion detection unit according to the present invention;

Fig. 7.1 is a diagram illustrating a slow moving edge control circuit;

Fig. 7.2 is an illustration of the slow moving edge control achieved by the circuit of Fig. 7.1, and

Fig. 8 is a diagram illustrating a further embodiment of a circuit for progressive scan conversion including a motion detection unit according to the present invention;

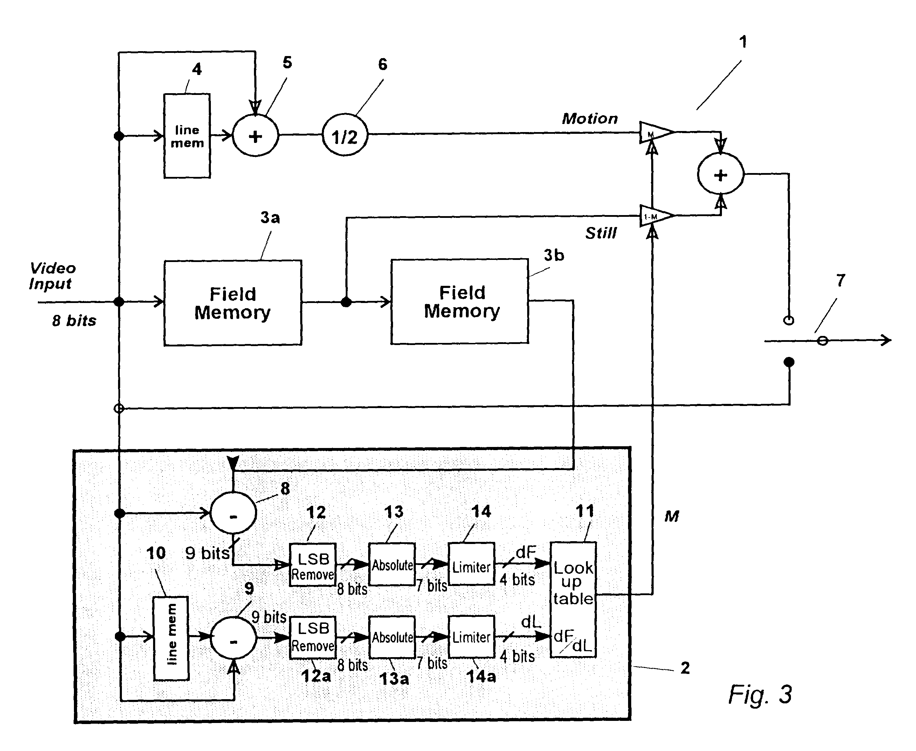

Fig 3. shows a structure similar to that of Fig. 2, however, with an improved motion detection unit 2 in accordance with one aspect of the present invention. Within Fig. 3 equal reference numbers, as within Fig. 2, designate equal circuit parts.

In the preferred embodiment for progressive scan conversion in accordance with the present invention, as shown in Fig. 3, a divider is not used to obtain motion information based on the calculated results $\Delta F$ and $\Delta L$, but instead a look-up table means 11 is used.

Optionally, units 12, 13, 14 and 12a, 13a, 14a may be added to process the output of subtractor units 8 and 9 respectively before supplying them to look-up table means 11. The function of these additional units will be explained more fully below.

Look-up table means 11 preferably stores, for each applied combination of $\Delta F$, $\Delta L$, a certain motion value, i.e. a velocity value M, which is used to control switching between motion interpolation and still interpolation.

Look-up table means 11 is preferably addressed by the finally applied $\Delta F$- and $\Delta L$-values, in that for each particular combination of these values a particular motion value is read out from the look-up table means 11.

Figs. 4a and 4b illustrate the manner in which the look-up table may be organised. As it is seen from Fig. 4a, certain combinations of ΔF and ΔL, which lead to a low division result, are related to a value indicating the presence of no motion. Combinations leading to higher division results are related to a higher motion values M. Thus, as can be seen from Fig. 4b, combinations related to a motion value of ¼, are considered to designate "quasi-still" combinations related to a motion value ½ to designate "medium-motion" etc..

Additional units 12, 12a of motion detection unit 2 can further reduce the necessary hardware amount by removing one or several of the least significant bits (LSB) of the values provided by subtractor units 8 and 9. A further reduction of the amount of bits finally supplied to look-up table means 11 may be achieved through the use of limiter-units 14 and 14a, which preferably cut off high values of ΔF and/or ΔL.

Besides reducing hardware complexity, the use of a look-up table means instead of a divider unit is also advantageous in that with the stored values in the look-up table means any non-linear characteristics inherent to the human eye system may be modelled. Further, by appropriate selection of the stored values, noise effects may be reduced by treating ΔF, ΔL combinations with small ΔF values, which may have been caused by noise uniquely as indicating still areas. This is also illustrated in Fig. 4a, in which combinations with small ΔF values are treated to indicate still areas, regardless of the corresponding ΔL values.

Absolute value units 13 and 13a of unit 2 of Fig. 3 convert negative and positive inputs into absolute values which, according to the binary notation, reduces the output by at least one bit. Omission of the sign and thus of the direction of motion is in most applications possible without adversely influencing the result.

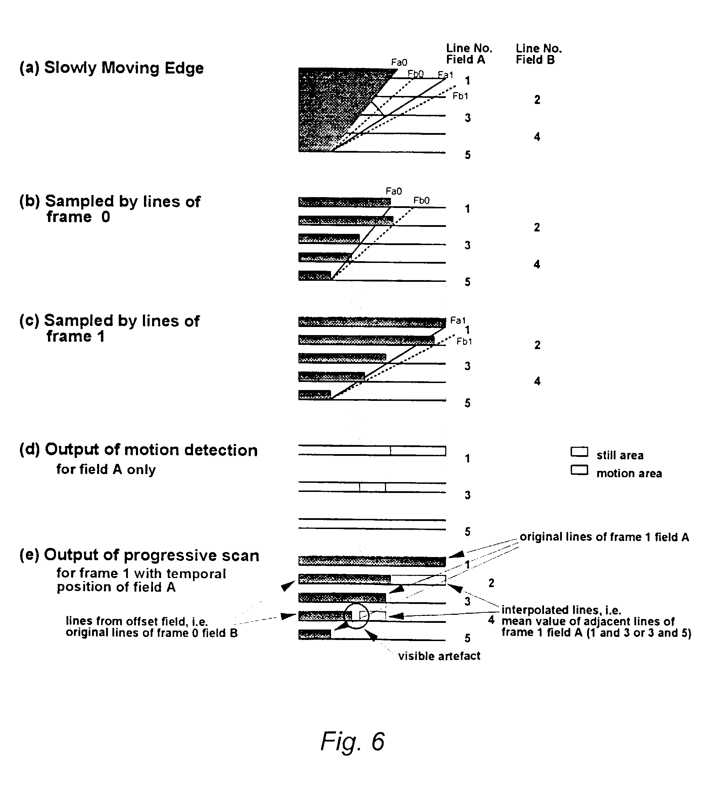

A further aspect of the present invention is concerned with an improvement preventing mis-detection of motion in particular situations. The problem addressed by this aspect of the present invention is illustrated by the example shown in Fig. 6.

Figs 6a-6e illustrate one problem which occurs with progressive scan conversion of an image having an object with a high contrast edge which is moving slowly. Fig. 6a shows the propagation of a black slowly moving edge from the time of generation of odd field FaO until generation of even field Fb1 in the next frame. Fig. 6b illustrates a representation of the black area in odd lines 1, 3, 5 during the time of odd field FaO and also shows the representation of the black area in even lines 2 and 4 during the subsequent even field Fb0.

Fig. 6c shows the same situation as within Fig. 4b for the time of the next frame and thus shows the extension of the black area during fields Fa1 and Fb1.

Fig. 6d illustrates the area of motion for odd fields caused by the movement of the black area in odd lines during field FaO and field Fa1.

Fig. 6e shows the interpolated progressive scan frame, which represents the temporal instant of input field Fa0 (frame 0, field A). Therefore, all odd lines are simply taken from field Fa0 without an change. All even lines are interpolated in accordance to the detected motion value, shown in Fig. 6d. In case of "No Motion" the pixel values are simply taken from field Fb0 (frame 0, field B). In case of "Motion" the average pixel value of the two adjacent odd lines of filed Fa0 is used, resulting in a grey value as a result of averaging black and white pixels. This is illustrated by the additional grey portions in even lines 2 and 4. As may be seen from line 4 of Fig. 6e, since the interpolation is only done for detected motion areas, it may happen that the interpolated additional grey area is not continuous with the end of the black area, in that a white gap between the black area of line 4 and the grey area of line 4 appears. Such gaps are visible within a picture and thus cause highly visible disturbances ("artefacts")

The problem illustrated within Figs. 6a-e generally occurs with slow moving, high contrast edges for which both motion and still areas are detected.

In order to overcome this problem, in accordance with the teaching of the present invention it is suggested to introduce vertical low-pass filter means within motion detection unit 2 in the circuit generating the frame difference ΔF.

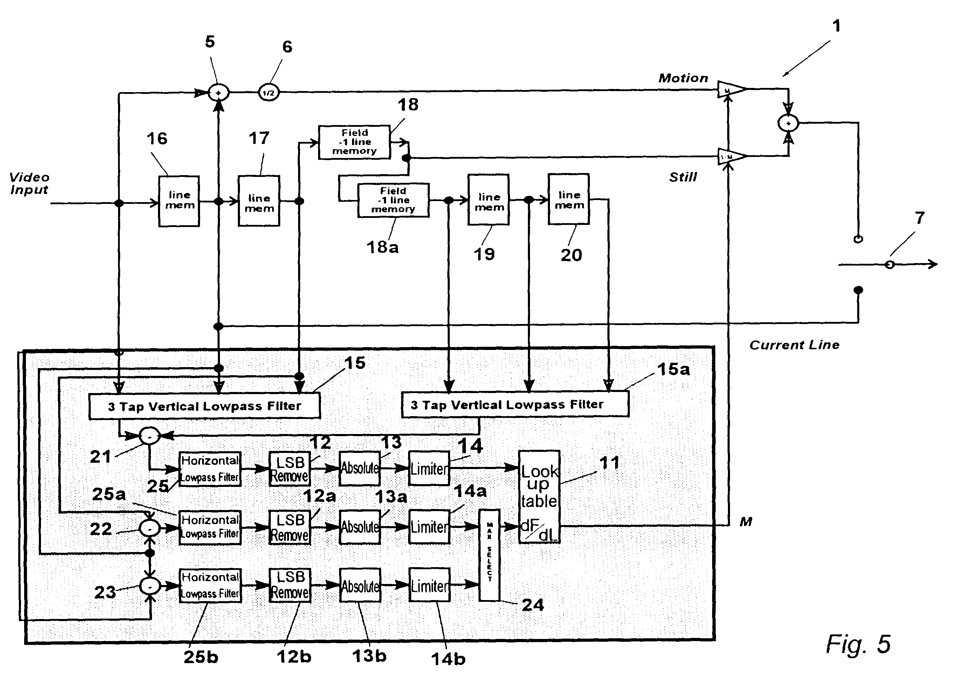

Fig. 5 shows an embodiment employing this further aspect of the present invention. The structure according to Fig. 5 equals, in some portions, the structure according to Fig. 3. However, it should be noted that this additional aspect of the present invention concerning the vertical low-pass filter means should be seen independently of the first aspect of the present invention, namely the provision of the look-up table means instead of the hardware divider. The second aspect of the present invention concerning the vertical low-pass filtering is also applicable independently of any look-up table means and may, for example, be employed in connection with any motion detection circuit, also those not using look-up table means.

Motion detection unit 2 of Fig. 5 includes two, three-tap vertical low-pass filters 15 and 15a, whereby three-tap vertical low-pass filter 15 receives as one input the current video signal and as a second input the output of line memory 16 and as a third input the output of line memory 18. Thus, three-tap vertical low-pass filter 15 receives the video signals of three subsequent lines of the current video image. Since the output of line memory 17 is also fed to field memories 18 and 18a, causing a delay of one frame, a further three-tap vertical low-pass 15a receives, as a first input, the output of field memory 18a, as a second input the output of line memory 19 and as a third input the output of line memory 20 and thus receives video signals of three subsequent lines from the frame preceding the current frame. The output of low-pass filters 15 and 15a are subtracted from each other by subtractor unit 21 which, similarly as within Fig. 3, provides the frame difference ΔF. Through the use of the vertical low-pass filters 15 and 15a, which both consider not only the current line but also adjacent lines, an average of a larger area is considered for the generation of ΔF. This means that, in particular in case of a nearly horizontal but still inclined object, simultaneous detection of motion and still areas is avoided since an average of three lines is considered instead of a single line.

Of course, vertical low-pass filters 15 and 15a could also receive information of only two successive lines or of more than three lines, for example, of five lines. The embodiment with the mentioned three-tap vertical low-pass filters has, however, provided good results and constitutes a good compromise between hardware complexity and accurate motion detection.

In particular, by use of the above vertical low-pass filter means, the problem explained in connection with Figs. 6a-e is substantially reduced.

The described vertical low-pass filter means also reduce mis-detection due to noise.

Preferably, field memories 18 and 18a are memories storing a whole field minus one line as indicated in Fig. 5. This capacity of field memories 18 and 18a ensures, in connection with the provision of line memories 16, 17, 19 and 20, that the output of line memory 19 is exactly delayed by one frame in regard to the output of line memory 16. Thus, if it is assumed that the output of line memory 16 corresponds to the current line then the respective vertical low-pass filter 15 considers the preceding line to the current line which is output by line memory 18 and the next subsequent line to the current line. Thus, in regard to the current line as output by line memory 16 as well as in regard to the corresponding line one frame before as output by line memory 19, the respective succeeding and preceding lines are additionally considered.

In accordance with Fig. 5, a third aspect of the present invention will now be explained whereby also in regard to this third aspect of the present invention it should be noted that this idea may also be used in connection with any other motion detection unit and not only with motion detection units that comprise low-pass filter means or look-up table means.

As it is shown, within the motion detection unit 2 of Fig. 5, by the provision of two subtractor units 22 and 23, two ΔL values are generated, the first being generated by subtractor unit 22 based on the actual line and the preceding line, and the second being produced by subtractor unit 23 based on a difference between the actual line and the subsequent line. With maximum selection at 24, the bigger value for ΔL is then selected and preferably provided to the look-up table means 11. Thus, also for the generation of ΔL, more than two lines are considered and through the use of the maximum selector 24 the biggest ΔL values is always used for addressing look-up table means 11, resulting in the selection of the smaller of two possible motion values thereby emphasising still areas over motion areas. Again, the problem explained in connection with Figs. 6a-e is substantially reduced.

As further shown in motion detection unit 2 of Fig. 5, the outputs of subtractor units 21, 22 and 23 are respectively fed to a least significant bit-remove unit, an absolute value unit and a limiter unit, similar as within Fig. 3.

Unit 2 of Fig. 5 shows, however, in addition to these units, in each path also a horizontal low-pass filter designated by reference numerals 25a, 25b and 25c respectively. These horizontal low-pass filters are used to reduce noise from the signals. Since, according to the present invention, motion detection is performed primarily in the vertical direction, horizontal low-pass filtering does not adversely effect motion detection in the vertical direction.

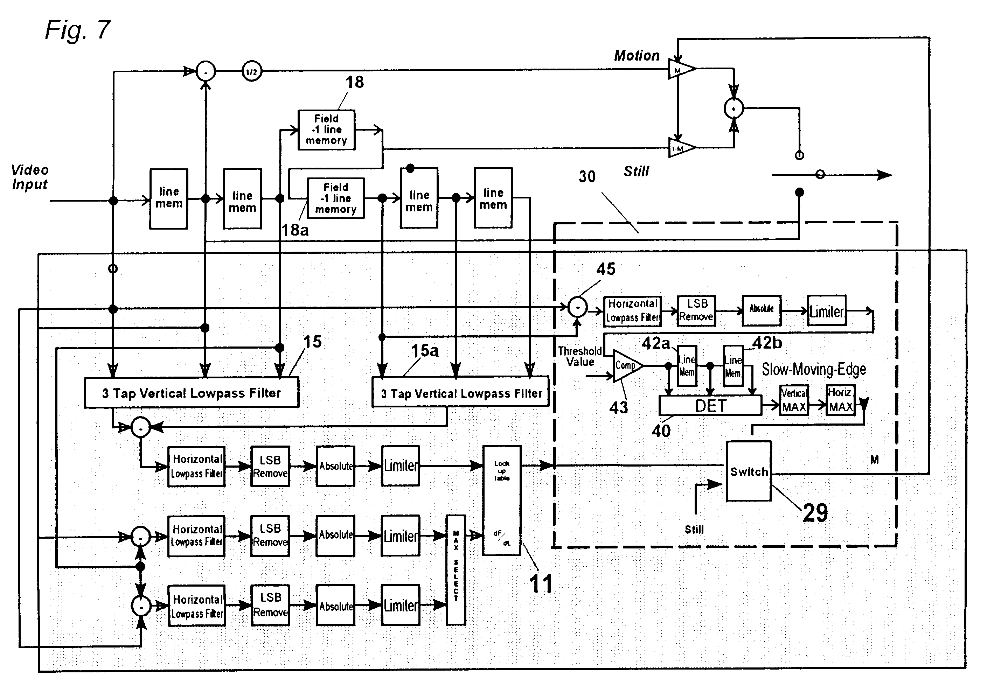

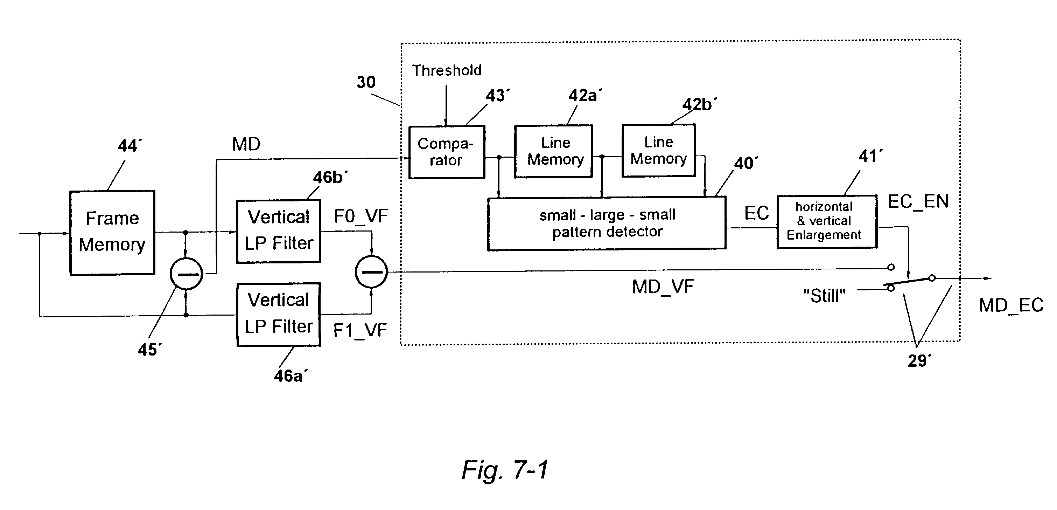

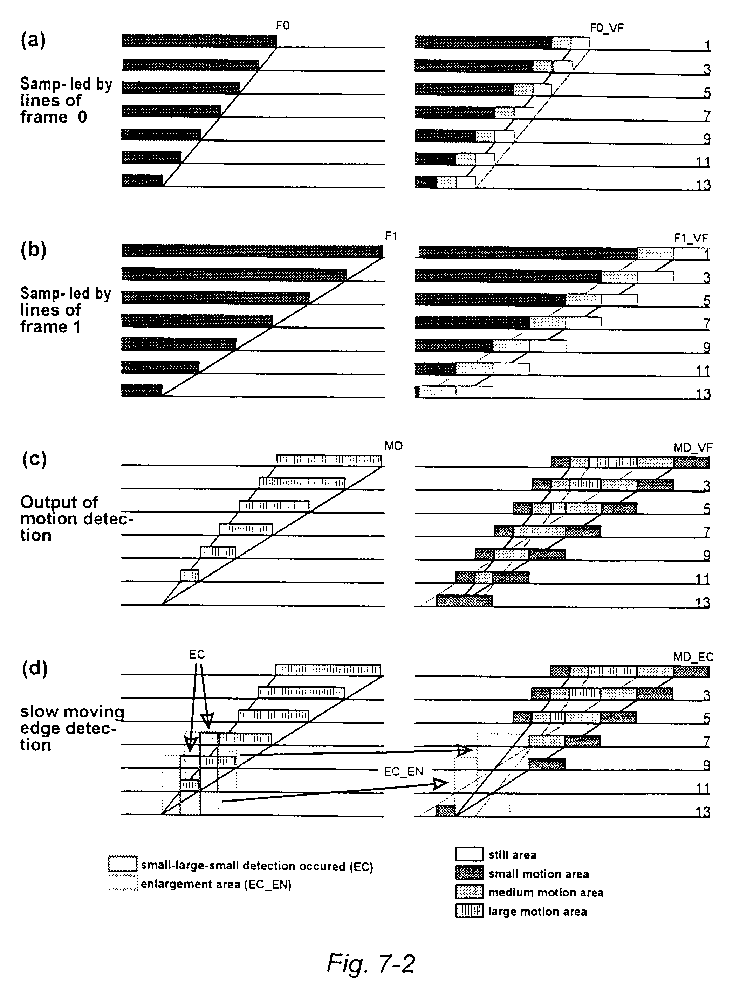

A fourth aspect of the present invention preventing false motion detection, is illustrated within Fig. 7. The structure according to Fig. 7 corresponds to the structure of Fig. 5 with an additional unit designated by reference numeral 30. Unit 30 includes a switch 29 which, under certain conditions, switches the motion value to a value corresponding to still pictures regardless whether or not look-up table means 11 provides a value indicating motion in the current picture. The switching of unit 29 is made in accordance with a signal generated by the further elements of unit 30.

The operation of unit 30 is explained in more detail in regard to Figs. 7.1 and 7.2.

In Fig. 7.1 the already described processing in combination with the new "slow moving edge control" is illustrated. Unit 30 uses the frame difference signal "MD" as input and manipulates the fully processed motion detection signal "MD_VF" to generate an output signal "MD_EC".

Unit 30 of Fig.7.1 comprises a comparator 43', line memories 42a', 42b', a small-large-small-pattern detector 40' and a horizontal and vertical enlargement unit 41'.

Comparator 43' receives frame difference signal MD and compares this signal with a predetermined threshold value. The output of comparator 43' is supplied to line memory 42a' and detector unit 40'. Pattern detector unit 40' additionally receives an output from line memory 42a' and an output from line memory 42b'. Pattern detector 40' detects slow moving edges by analyzing the supplied signals and outputs a signal EC to horizontal and vertical enlargement unit 41'. Horizontal and vertical enlargement unit 41' generates a signal EC_EN controlling switch 29' and thus controlling the switching between motion detection signal MD_VF and a motion value indicating "no motion".

The operation of the circuit of Fig.7.1 is illustrated in Fig.7.2.

Based on the already used example (see Fig. 6), the influence of the vertical filtering is demonstrated in Fig. 7.2. On the left side of Fig. 7.2(C) the motion detection signal without a vertical filter, and on the right side with vertical filter is shown. Large motion values are suppressed in areas of slow motion (circulation point, lower left side), or reduced in areas of faster motion (upper right side).

The "slow moving edge detector" first quantises all motion values in "no motion" and "motion" based on a pre-defined threshold. Then it compares motion information of 3 successive lines at the same vertical pixel position. If the centre position is "motion" and the upper and lower positions are "no motion" then, and only then, it activates a control signal "EC". In a next step this control signal is enlarged in vertical and horizontal direction, e.g. by 1 line and 1 pixel. This enlarged signal "EC_EN" then controls a switch. In case where the signal is not active the motion detection signal "MD_VF" is passed through. In case where the signal is active, the output signal of motion detection is forced to "Still". In Fig. 7.2 (d) the derivation of the control signal is shown on the left side, and the influence to the motion detection is shown on the right side. As it can be seen, the motion values for the slow motion area (circulation point, lower left side) are overwritten by the "slow moving edge control" to status "still". Areas of higher motion (upper right side) are not influenced by this circuitry.

As will be understood, pattern detector 40' of Fig. 7.1 corresponds to detection unit 40 of Fig. 7, horizontal and vertical enlargement unit 41' corresponds to vertical max and horizontal max unit 41, line memories 42a', 42b correspond to line memories 42a', 42b, comparator 43' corresponds to comparator 43 ,switch 29' corresponds to switch 29, frame memory 44' corresponds to field memories 18 and 18a, substracting unit 45' corresponds to substracting unit 45, and vertical low-pass filters 46' and 46a' correspond to vertical low-pass filter means 15 and 15a.

As will be seen, Fig. 7.1 does not include line difference means or look-up table means, as included in the circuit of Fig. 7.

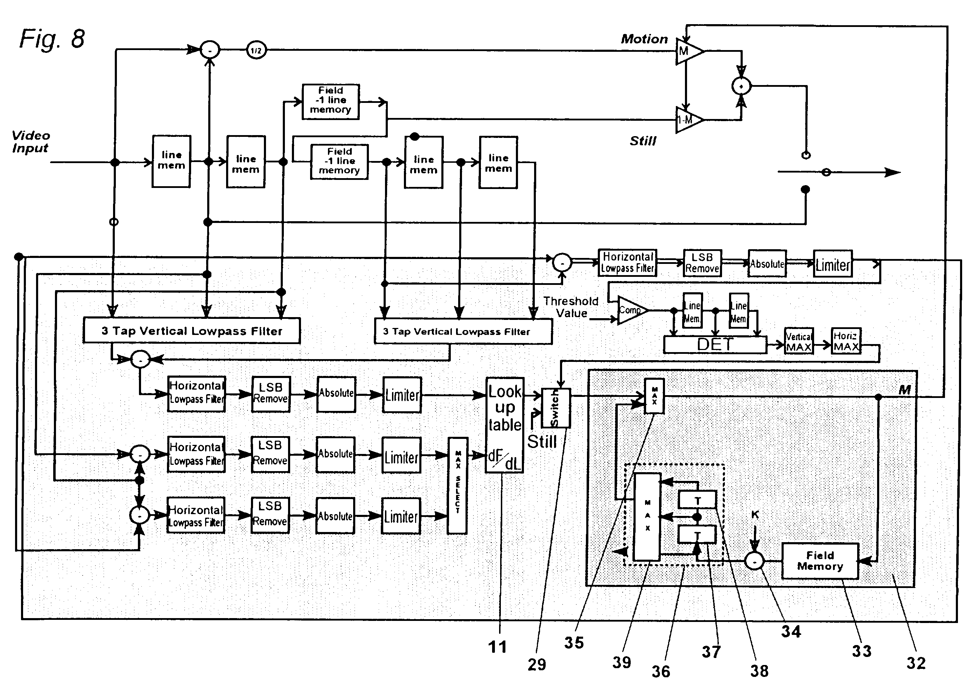

One reason therefor is that the principle underlying the slow motion edge control circuit of Fig. 7.1 may be more easily understood without these additional units. Another reason therefor is that the circuit described in connection with Fig. 7.1 is considered to constitute an independent invention and is also advantageous without the additional circuit components of Fig. 7. For example, Unit 30, as explained in Fig. 7.1, may be combined with a circuit explained in connection with Fig. 2, i.e. with a circuit not having a look-up table means, a maximum selection unit or a vertical low pass filter etc. The best results will, however, be achieved if unit 30 of Fig. 7.1 is used in connection with the embodiments explained in connection with Fig. 7 or Fig. 8.

Again the problem explained in connection with Figs. 6a-e is substantially reduced.

A fifth aspect of the present invention will now be explained in connection with Fig. 8. The structure of the embodiment according to Fig. 7 is similar to the embodiment described in connection with Fig. 7 with the provision of an additional block designated by the reference numeral 32.

If motion is detected based on frame differences, as within the embodiments described above, then the result of this motion detection is very much depending on the velocity of moving objects. Depending on the temporal sampling rate, for example 25 Hz, some velocities can be detected very reliably, for others nearly no detection at all is possible. This may cause mis-detection of motion by the respective motion detection unit. If, for example, a spoke wheel turns with a particular speed, it may happen, due to a particular picture sampling rate, that the spokes of the wheel appear to stand still or that they even turn in the reverse direction. This effect may result in the determination of a still picture instead of a moving picture and may, therefore, cause a wrong interpretation leading to the representation of two identical pictures showing a certain offset to each other.

According to the present invention this problem may be overcome by spreading detected motion over successive fields with a decreasing motion level. This technique is shown in accordance with the embodiment of Fig. 7 where a certain motion level is fed back through field memory 33 and the output of field memory 33 is supplied to a subtractor unit 34. Within subtractor unit 34 the motion values of the preceding field are decreased by a parameter K and thus a motion value detected for a certain area is subsequently decreased for each field by the selected parameter K.

Through the combined function of maximum selector unit 35 and subtractor unit 34 a detected motion M is spread, in time, over successive fields. The spreading is only interrupted if, in the meantime, a higher motion value is provided by look-up table means 11 through switch 29. The additional unit 36 connected in between subtractor unit 34 and maximum selector unit 35 causes an additional spatial spreading by which the highest motion value of two or more lines is supplied to the mentioned maximum selector 35. The function of unit 36 is achieved by illustrating two line memories 37 and 38 and a further maximum selector unit 39, which selects the highest motion value from pixels of three successive lines and supplies the selected motion value to maximum selector unit 35.

## Claims

1. Motion detection circuit for detecting motion in a picture represented by video signals comprising:

   frame memory means (3a, 3b) for delaying an input video signal by one frame,

   frame difference generation means (8) for providing a frame difference signal based on an input video signal and a video signal provided by said frame memory means (3a, 3b),

   line difference generation means (9, 10) for providing a line difference signal based on at least two adjacent lines of a field of an input video signal,

look-up table means (11) for storing motion values indicative of different amounts of motion in a picture represented by video signals,

wherein said look-up table means (11) is addressed by a combination of signals output by said line difference generation means and said frame difference generation means for providing as an output selected ones of said stored motion values in accordance with motion contained in the picture represented by said video signals.

2. Motion detection circuit according to claim 1, wherein each motion value output by said look-up table means represents motion for a certain pixel of said picture.

3. Motion detection circuit according to claim 1 or 2, wherein said frame difference generation means comprises a substractor unit (8).

4. Motion detection circuit according to one of the preceding claims wherein said line difference generation means comprises a line memory (10) and a substractor unit (9).

5. Motion detection circuit according to one of the preceding claims wherein said motion detection circuit is a digital circuit, preferably for processing an 8-bit video input.

6. Motion detection circuit according to claim 5 further comprising a least significant bit remove-unit (12) coupled between the output of said frame difference generation means and said look-up table means (11) to remove at least the least significant bit from a word provided by said frame difference generation means.

7. Motion detection circuit according to claim 5 or 6, further comprising a least significant bit remove-unit (12a; 12b) coupled between the output of said line difference generation means and said look-up table means (11) to remove at least the least significant bit from a word provided by that line difference generation means.

8. Motion detection circuit according to one of the claims 5-7 comprising an absolute value generation means (13) coupled between said frame difference generation means and said look-up table means (11) to convert input words in absolute values.

9. Motion detection circuit according to one of the claims 5-8 further comprising an absolute value generation means (13a; 13b) coupled between said line difference generation means and said look-up table means (11) and to convert input words in absolute values.

10. Motion detection circuit according to one of the claims 5-9 further comprising a limiter means (14) coupled between said frame difference generation means and said look-up table means (11) for limiting the value of an input word to a maximum value.

11. Motion detection circuit according to one of the claims 5-10 further comprising limiter means (14a; 14b) coupled between said line difference generation means and said look-up table means (11) for limiting the value of an input word to a maximum value.

12. Motion detection circuit according to one of the preceding claims further comprising horizontal low-pass filter means (25) coupled between said frame difference generation means and said look-up table means.

13. Motion detection circuit according to one of the preceding claims further comprising horizontal low-pass filter means (25a; 25b) coupled between said line difference generation means and said look-up table means.

14. Motion detection circuit according to one of the preceding claims wherein said look-up table means (11) outputs a motion value indicating no motion when addressed by a signal of said frame difference generation means which indicates a small frame difference.

15. Motion detection circuit according to one of the preceding claims further comprising vertical low-pass filter means (15, 15a) for filtering the signals applied to the frame difference generation means or the signals provided by said frame difference generation means.

16. Motion detection circuit according to claim 15 wherein said vertical low-pass filter means comprises two three-tap vertical low-pass filters (15, 15a), one filtering the input video signal provided to the frame difference generation means and the other filtering the output of said frame memory means.

17. Motion detection circuit according to claim 16 wherein each three-tap vertical low-pass filter receives video signals of three adjacent lines of a field.

18. Motion detection circuit according to one of the preceding claims comprising at least one further line difference generation means (23) wherein the line difference generation means and said at least one further line difference generation means generate line differences between adjacent pairs of lines of a field and wherein a maximum selector unit (24) is provided which selects the respective higher line difference value of the line difference values provided by the at least two line difference generation means and provides said higher line difference value for addressing said look-up table means.

19. Motion detection circuit according to one of the preceding claims further comprising motion value spreading means (32) for temporary spreading motion values provided by said look-up table means over successive fields of said video signal.

20. Motion detection circuit according to claim 19 wherein said motion spreading means (32) comprises a field memory (33) and a motion value reduction means (34), said field memory means (33) receives the output of that look-up table means and said motion value reduction means (34) receives the output of said field memory means for reducing a received motion value by a certain amount.

21. Motion detection circuit according to claim 20 further comprising a further maximum selector unit (35) for selecting and passing the higher value among a value received from the look-up table means and a value received from said motion value reduction means (34).

22. Motion detection circuit according to one of the claims 20 or 21 further comprising a maximum line difference selecting means (36) for selecting the maximum motion value for at least two adjacent lines as output by said motion value reduction means (34).

23. Motion detecting circuit according to one of the preceding claims further comprising a slow moving edge control circuit (30) coupled to said frame difference generation means (8) for replacing , in case of the detection of a slow moving edge, the motion value supplied by said look-up table means by a value representative of no motion.

24. Motion adaptive progressive scan conversion circuit comprising:

motion picture interpolation means (4, 5, 6) and still picture interpolation means (3a),

switching means (1) for switching between the output of said motion picture interpolation means and said still picture interpolation means and,

a motion detection circuit according to one of the claims 1-22 wherein said switching means (1) switches between the output of said motion picture interpolation means and said still picture interpolation means in accordance with the output provided by that motion detection circuit.

25. Motion adaptive progressive scan conversion circuit according to claim 24 wherein said motion picture interpolation means comprises a line average circuit for averaging brightness values of two successive lines.

26. Television receiver comprising a motion detection circuit according to one of the claims 1-23.

27. Television receiver according to claim 26 further comprising a motion adaptive scan conversion unit according to claims 24 or 25.

**Patentansprüche**

1. Bewegungserfassungsschaltung zum Erfassen von Bewegung in einem Bild, das durch Videosignale dargestellt wird, die umfasst:

eine Teilbild-Speichereinrichtung (3a, 3b), die ein Eingangs-Videosignal um ein Teilbild verzögert,

eine Teilbild-Differenz-Erzeugungseinrichtung (8), die ein Teilbild-Differenzsignal auf der Grundlage eines Eingangs-Videosignals und eines Videosignals erzeugt, das durch die Teilbild-Speichereinrichtung (3a, 3b) erzeugt wird,

eine Zeilen-Differenz-Erzeugungseinrichtung (9, 10), die ein Zeilen-Differenzsignal auf der Grundlage wenigstens zweier benachbarter Zeilen eines Halbbilds eines Eingangs-Videosignals erzeugt,

eine Verweistabelleneinrichtung (11), die Bewegungswerte speichert, die verschiedene Beträge der Bewegung in einem Bild anzeigen, das durch Videosignale dargestellt wird,

wobei die Verweistabelleneinrichtung (11) durch eine Kombination von Signalen adressiert wird, die von der Zeilen-Differenz-Erzeugungseinrichtung und der Teilbild-Differenz-Erzeugungseinrichtung ausgegeben werden, um als Ausgang ausgewählte der gespeicherten Bewegungswerte entsprechend der Bewegung zu erzeugen, die in dem Bild enthalten ist, das durch die Videosignale dargestellt wird.

**2.** Bewegungserfassungsschaltung nach Anspruch 1, wobei jeder Bewegungswert, der von der Verweistabelleneinrichtung ausgegeben wird, Bewegung für einen bestimmten Bildpunkt des Bilds darstellt.

**3.** Bewegungserfassungsschaltung nach Anspruch 1 oder 2, wobei die Teilbild-Differenz-Erzeugungseinrichtung eine Subtrahier-Einheit (8) umfasst.

**4.** Bewegungserfassungsschaltung nach einem der vorangehenden Ansprüche, wobei die Zeilen-Differenz-Erzeugungseinrichtung einen Zeilenspeicher (10) und eine Subtrahiereinheit (9) umfasst.

**5.** Bewegungserfassungsschaltung nach einem der vorangehenden Ansprüche, wobei die Bewegungserfassungsschaltung eine digitale Schaltung ist, die vorzugsweise zum Verarbeiten eines 8-Bit-Videoeingangs dient.

**6.** Bewegungserfassungsschaltung nach Anspruch 5, die des Weiteren eine Einheit zum Entfernen eines niedrigstwertigen Bits (12) umfasst, die zwischen den Ausgang der Teilbild-Differenz-Erzeugungseinrichtung und die Verweistabelleneinrichtung (11) geschaltet ist, um wenigstens das niedrigstwertige Bit aus einem Wort zu entfernen, das durch die Teilbild-Differenz-Erzeugungseinrichtung geschaffen wird.

**7.** Bewegungserfassungsschaltung nach Anspruch 5 oder 6, die des Weiteren eine Einheit zum Entfernen eines niedrigstwertigen Bits (12a; 12b) umfasst, die zwischen den Ausgang der Zeilen-Differenz-Erzeugungseinrichtung und die Verweistabelleneinrichtung (11) geschaltet ist, um wenigstens das niedrigstwertige Bit aus einem Wort zu entfernen, das durch die Zeilen-Differenz-Erzeugungseinrichtung erzeugt wurde.

**8.** Bewegungserfassungsschaltung nach einem der Ansprüche 5-7, die eine Absolutwert-Erzeugungseinrichtung (13) umfasst, die zwischen die Teilbild-Differenz-Erzeugungseinrichtung und die Verweistabelleneinrichtung (11) geschaltet ist, um eingegebene Wörter in Absolutwerte umzuwandeln.

**9.** Bewegungserfassungsschaltung nach einem der Ansprüche 5-8, die des Weiteren eine Absolutwert-Erzeugungseinrichtung (13a; 13b) umfasst, die zwischen die Zeilen-Differenz-Erzeugungseinrichtung und die Verweistabelleneinrichtung (11) geschaltet ist, um eingegebene Wörter in Absolutwerte umzuwandeln.

**10.** Bewegungserfassungsschaltung nach einem der Ansprüche 5-9, die des Weiteren eine Begrenzereinrichtung (14) umfasst, die zwischen die Teilbild-Differenz-Erzeugungseinrichtung und die Verweistabelleneinrichtung (11) geschaltet ist, um den Wert eines eingegebenen Worts auf einen Maximalwert zu begrenzen.

**11.** Bewegungserfassungsschaltung nach einem der Ansprüche 5-10, die des Weiteren eine Begrenzereinrichtung (14a; 14b) umfasst, die zwischen die Zeilen-Differenz-Erzeugungseinrichtung und die Verweistabelleneinrichtung (11) geschaltet ist, um den Wert eines eingegebenen Worts auf einen Maximalwert zu begrenzen.

**12.** Bewegungserfassungsschaltung nach einem der vorangehenden Ansprüche, die des Weiteren eine horizontale Tiefpassfiltereinrichtung (25) umfasst, die zwischen die Teilbild-Differenz-Erzeugungseinrichtung und die Verweistabelleneinrichtung geschaltet ist.

**13.** Bewegungserfassungsschaltung nach einem der vorangehenden Ansprüche, die des Weiteren horizontale Tiefpassfiltereinrichtungen (25a; 25b) umfasst, die zwischen die Zeilen-Differenz-Erzeugungseinrichtung und die Verweistabelleneinrichtung geschaltet sind.

**14.** Bewegungserfassungsschaltung nach einem der vorangehenden Ansprüche, wobei die Verweistabelleneinrichtung (11) einen Bewegungswert ausgibt, der keine Bewegung anzeigt, wenn sie durch ein Signal der Teilbild-Differenz-Erzeugungseinrichtung adressiert wird, das eine geringe Teilbild-Differenz anzeigt.

**15.** Bewegungserfassungsschaltung nach einem der vorangehenden Ansprüche, die des Weiteren eine vertikale Tiefpassfiltereinrichtung (15, 15a) umfasst, die die Signale filtert, die an die Teilbild-Differenz-Erzeugungseinrichtung angelegt werden, oder die Signale, die von der Teilbild-Differenz-Erzeugungseinrichtung erzeugt werden.

**16.** Bewegungserfassungsschaltung nach Anspruch 15, wobei die vertikale Tiefpassfiltereinrichtung zwei vertikale Tiefpassfilter mit drei Anzapfungen (15, 15a) umfasst, wobei eines das Eingangsvideosignal filtert, das von der Teilbild-Differenz-Erzeugungseinrichtung erzeugt wird, und das andere den Ausgang der Teilbild-Speichereinrichtung filtert.

**17.** Bewegungserfassungsschaltung nach Anspruch 16, wobei jedes vertikale Tiefpassfilter mit drei Anzapfungen Videosignale dreier benachbarter Zeilen eines Halbbilds empfängt.

**18.** Bewegungserfassungsschaltung nach einem der vorangehenden Ansprüche, die wenigstens eine weitere Zeilen-Differenz-Erzeugungseinrichtung (23) umfasst, wobei die Zeilen-Differenz-Erzeugungseinrichtung und die wenigstens eine weitere Zeilen-Differenz-Erzeugungseinrichtung Zeilendifferenzen zwischen benachbarten Paaren von Zeilen eines Halbbilds erzeugen, und wobei eine Maximum-Auswähleinheit (24) vorhanden ist, die den jeweils höheren Zeilen-Differenz-Wert der Zeilen-Differenz-Werte auswählt, die von den wenigstens zwei Zeilen-Differenz-Erzeugungseinrichtung erzeugt werden, und den höheren Zeilen-Differenz-Wert zum Adressieren der Verweistabelleneinrichtung erzeugt.

19. Bewegungserfassungsschaltung nach einem der vorangehenden Ansprüche, die des Weiteren eine Bewegungswert-Verteileinrichtung (32) umfasst, die Bewegungswerte, die durch die Verweistabelleneinrichtung erzeugt wurden, zeitlich auf aufeinanderfolgende Halbbilder des Videosignals verteilt.

20. Bewegungserfassungsschaltung nach Anspruch 19, wobei die Bewegungs-Verteileinrichtung (32) einen Halbbild-Speicher (33) und eine Bewegungswert-Verringerungseinrichtung (34) umfasst, wobei die Halbbild-Speichereinrichtung (33) den Ausgang der Verweistabelleneinrichtung empfängt und die Bewegungswert-Verringerungseinrichtung (34) den Ausgang der Halbbild-Speichereinrichtung empfängt, um einen empfangenen Bewegungswert um einen bestimmten Betrag zu verringern.

21. Bewegungserfassungsschaltung nach Anspruch 20, die des Weiteren eine weitere Maximum-Auswähleinheit (32) umfasst, die den höheren Wert aus einem von der Verweistabelleneinrichtung und einem von der Bewegungswert-Verringerungseinrichtung (34) empfangenen Wert auswählt und weiterleitet.

22. Bewegungserfassungsschaltung nach einem der Ansprüche 20 oder 21, die des Weiteren eine Maximal-Zeilen-Differenz-Auswähleinrichtung (36) umfasst, die den maximalen Bewegungswert für wenigstens zwei benachbarte Zeilen als Ausgang durch die Bewegungswert-Verringerungseinrichtung (34) auswählt.

23. Bewegungserfassungsschaltung nach einem der vorangehenden Ansprüche, die des Weiteren eine Steuerschaltung für einen sich langsam bewegenden Rand (30) umfasst, die mit der Teilbild-Differenz-Erzeugungseinrichtung (8) verbunden ist, um beim Erfassen eines sich langsam bewegenden Rands den durch die Verweistabelle zugeführten Bewegungswert durch einen Wert zu ersetzen, der für keine Bewegung steht.

24. Bewegungsangepasste Schaltung zum Wandeln mit fortlaufender Abtastung, die umfasst:

eine Bewegungsbild-Interpolationseinrichtung (4, 5, 6) sowie eine Standbild-Interpolationseinrichtung (3a),

eine Umschalteinrichtung (1) zum Umschalten zwischen dem Ausgang der Bewegungsbild-Interpolationseinrichtung und der Standbild-Interpolationseinrichtung, und

eine Bewegungserfassungsschaltung nach einem der Ansprüche 1-22, wobei die Umschalteinrichtung (1) zwischen dem Ausgang der Bewegungsbild-Interpolationseinrichtung und der Standbild-Interpolationseinrichtung entsprechend dem Ausgang umschaltet, der durch die Bewegungserfassungsschaltung erzeugt wird.

25. Bewegungsangepasste Schaltung zum Umwandeln mit fortlaufender Abtastung gemäß Anspruch 24, wobei die Bewegungsbild-Interpolationseinrichtung eine Zeilen-Mittelwert-Schaltung zum Mitteln von Helligkeitswerten zweier aufeinanderfolgender Zeilen umfasst.

26. Fernsehempfänger, der eine Bewegungserfassungsschaltung nach einem der Ansprüche 1-23 umfasst.

27. Fernsehempfänger nach Anspruch 26, der des Weiteren eine bewegungsangepasste Abtast-Umwandlungsschaltung nach einem der Ansprüche 24 oder 25 umfasst.

**Revendications**

1. Circuit de détection de mouvement pour détecter un mouvement dans une image représentée par des signaux vidéo, comportant :

des moyens de mémoire de trame (3a, 3b) pour retarder d'une trame un signal vidéo d'entrée, des moyens de génération de différence de trames (8) pour délivrer un signal de différence de trames basé sur un signal vidéo d'entrée et un signal vidéo délivré par lesdits moyens de mémoire de trame (3a, 3b), des moyens de génération de différence de lignes (9, 10) pour délivrer un signal de différence de lignes sur la base d'au moins deux lignes adjacentes d'un champ d'un signal vidéo d'entrée, des moyens de table de consultation (11) pour mémoriser des valeurs de mouvement représentatives de différentes quantités de mouvement dans une image représentée par des signaux vidéo,

dans lequel lesdits moyens de table de consultation (11) sont adressés par une combinaison de signaux émis par lesdits moyens de génération de différence de lignes et lesdits moyens de génération de différence de trames pour délivrer en tant que sortie des valeurs sélectionnées parmi lesdites valeurs de mouvement mémorisées conformément à un mouvement contenu dans l'image représentée par lesdits signaux vidéo.

2. Circuit de détection de mouvement selon la revendication 1, dans lequel chaque valeur de mouvement émise par lesdits moyens de table de consultation représente un mouvement pour un certain pixel de ladite image.

3. Circuit de détection de mouvement selon la revendication 1 ou 2, dans lequel lesdits moyens de génération de différence de trames comportent une unité de soustraction (8).

4. Circuit de détection de mouvement selon l'une quelconque des revendications précédentes, dans lequel lesdits moyens de génération de différence de lignes comportent une mémoire de lignes (10) et une unité de soustraction (9).

5. Circuit de détection de mouvement selon l'une quelconque des revendications précédentes, dans lequel ledit circuit de détection de mouvement est un circuit numérique, destiné de préférence à traiter une entrée vidéo de 8 bits.

6. Circuit de détection de mouvement selon la revendication 5, comportant de plus au moins une unité de suppression du bit le moins significatif (12) montée entre la sortie desdits moyens de génération de différence de trames et lesdits moyens de table de consultation (11) pour supprimer au moins le bit le moins significatif d'un mot fourni par lesdits moyens de génération de différence de trames.

7. Circuit de détection de mouvement selon la revendication 5 ou 6, comportant de plus une unité de suppression de bit le moins significatif (12a ; 12b) montée entre la sortie desdits moyens de génération de différence de lignes et lesdits moyens de table de consultation (11) pour supprimer au moins le bit le moins significatif d'un mot délivré par ces moyens de génération de différence de lignes.

8. Circuit de détection de mouvement selon l'une quelconque des revendications 5 à 7, comportant des moyens de génération de valeurs absolues (13) montés entre lesdits moyens de génération de différence de trames et lesdits moyens de table de consultation (11) pour convertir des mots d'entrée en valeurs absolues.

9. Circuit de détection de mouvement selon l'une quelconque des revendications 5 à 8, comportant de plus des moyens de génération de valeurs absolues (13a ; 13b) montés entre lesdits moyens de génération de différence de lignes et lesdits moyens de table de consultation (11) pour convertir des mots d'entrée en valeurs absolues.

10. Circuit de détection de mouvement selon l'une quelconque des revendications 5 à 9, comportant de plus des moyens de limitation (14) montés entre lesdits moyens de génération de différence de trames et lesdits moyens de table de consultation (11) pour limiter la valeur d'un mot d'entrée à une valeur maximale.

11. Circuit de détection de mouvement selon l'une quelconque des revendications 5 à 10, comportant de plus des moyens de limitation (14a ; 14b) montés entre lesdits moyens de génération de différence de lignes et lesdits moyens de table de consultation (11) pour limiter la valeur d'un mot d'entrée à une valeur maximale.

12. Circuit de détection de mouvement selon l'une quelconque des revendications précédentes, comportant de plus des moyens de filtrage passe-bas horizontal (25) montés entre lesdits moyens de génération de différence de trames et lesdits moyens de table de consultation.

13. Circuit de détection de mouvement selon l'une quelconque des revendications précédentes, comportant de plus des moyens de filtrage passe-bas horizontal (25a ; 25b) montés entre lesdits moyens de génération de différence de lignes et lesdits moyens de table de consultation.

14. Circuit de détection de mouvement selon l'une quelconque des revendications précédentes, dans lequel lesdits moyens de table de consultation (11) émettent une valeur de mouvement indiquant "aucun mouvement" lorsqu'ils sont adressés par un signal desdits moyens de génération de différence de trames qui indique une petite différence de trames.

15. Circuit de détection de mouvement selon l'une quelconque des revendications précédentes, comportant de plus des moyens de filtrage passe-bas vertical (15, 15a) pour filtrer les signaux appliqués aux moyens de génération de différence de trames ou les signaux délivrés par lesdits moyens de génération de différence de trames.

**16.** Circuit de détection de mouvement selon la revendication 15, dans lequel lesdits moyens de filtrage passe-bas vertical comportent deux filtres passe-bas verticaux à trois prises (15, 15a), l'un filtrant le signal vidéo d'entrée délivré dans les moyens de génération de différence de trames et l'autre filtrant la sortie desdits moyens de mémoire de trame.

**17.** Circuit de détection de mouvement selon la revendication 16, dans lequel chaque filtre passe-bas vertical à trois prises reçoit des signaux vidéo de trois lignes adjacentes d'un champ.

**18.** Circuit de détection de mouvement selon l'une quelconque des revendications précédentes, comportant au moins des moyens supplémentaires de génération de différence de lignes (23) dans lesquels les moyens de génération de différence de lignes et lesdits au moins moyens supplémentaires de génération de différence de lignes génèrent des différences de lignes entre des paires adjacentes de lignes d'un champ et dans lequel une unité de sélection de valeur maximale (24) est fourni qui sélectionne la valeur de différence de lignes supérieure respective parmi les valeurs de différence de lignes délivrées par les au moins deux moyens de génération de différence de lignes et délivre ladite valeur de différence de lignes supérieure pour adresser lesdits moyens de table de consultation.

**19.** Circuit de détection de mouvement selon l'une quelconque des revendications précédentes, comportant de plus des moyens de répartition de valeurs de mouvement (32) pour répartir temporairement des valeurs de mouvement délivrées par lesdits moyens de table de consultation sur des champs successifs dudit signal vidéo.

**20.** Circuit de détection de mouvement selon la revendication 19, dans lequel lesdits moyens de répartition de mouvement (32) comportent une mémoire de champ (33) et des moyens de réduction de valeur de mouvement (34), lesdits moyens de mémoire de champ (33) reçoivent la sortie de ces moyens de table de consultation et lesdits moyens de réduction de valeur de mouvement (34) reçoivent la sortie desdits moyens de mémoire de champ pour réduire d'une certaine quantité une valeur de mouvement reçu.

**21.** Circuit de détection de mouvement selon la revendication 20, comportant de plus une unité supplémentaire de sélection de valeur maximale (35) pour sélectionner et laisser passer la valeur supérieure parmi une valeur reçue depuis les moyens de table de consultation et une valeur reçue depuis lesdits moyens de réduction de valeur de mouvement (34).

**22.** Circuit de détection de mouvement selon l'une quelconque des revendications 20 ou 21, comportant de plus des moyens de sélection de différence de lignes maximale (36) pour sélectionner la valeur de mouvement maximale pour au moins deux lignes adjacentes telle qu'émise par lesdits moyens de réduction de valeur de mouvement (34).

**23.** Circuit de détection de mouvement selon l'une quelconque des revendications précédentes, comportant de plus un circuit de commande de bord mobile lent (30) couplé auxdits moyens de génération de différence de trames (8) pour remplacer, dans le cas de la détection d'un bord mobile lent, la valeur de mouvement délivrée par lesdits moyens de table de consultation par une valeur représentative d'aucun mouvement.

**24.** Circuit de conversion de balayage non-entrelacé adaptatif en termes de mouvement, comportant :

des moyens d'interpolation d'image animée (4, 5, 6) et des moyens d'interpolation d'image fixe (3a),
des moyens de commutation (1) pour commuter la sortie desdits moyens d'interpolation d'image animée et la sortie desdits moyens d'interpolation d'image fixe, et
un circuit de détection de mouvement selon l'une quelconque des revendications 1 à 22, dans lequel lesdits moyens de commutation (1) commutent la sortie desdits moyens d'interpolation d'image animée et la sortie desdits moyens d'interpolation d'image fixe conformément à la sortie délivrée par ce circuit de détection de mouvement.

**25.** Circuit de conversion de balayage non-entrelacé adaptatif en termes de mouvement selon la revendication 24, dans lequel lesdits moyens d'interpolation d'image animée comportent un circuit de mise en moyenne de ligne pour établir une moyenne des valeurs de luminosité de deux lignes successives.

**26.** Récepteur de télévision comportant un circuit de détection de mouvement selon l'une quelconque des revendications 1 à 23.

**27.** Récepteur de télévision selon la revendication 26, comportant de plus une unité de conversion de balayage adaptatif en termes de mouvement conformément aux revendications 24 ou 25.

*Fig. 1a*

*Fig. 1b*

Fig. 2

Fig. 3

*Fig. 4a*

| dF / dL | M | Mode |
|---|---|---|
| 4 | 1 | motion |
| 3 | 3/4 | quasi motion |
| 2 | 1/2 | medium motion |
| 1 | 1/4 | quasi still |
| 0 | 0 | still |

*Fig. 4b*

16

Fig. 5

Fig. 6

Fig. 7

Fig. 7-1

Fig. 7-2

Fig. 8